(19) Europäisches Patentamt
European Patent Office
Office européen des brevets

(11) **EP 3 783 501 B1**

(12) **FASCICULE DE BREVET EUROPEEN**

(45) Date de publication et mention
de la délivrance du brevet:
**02.10.2024 Bulletin 2024/40**

(21) Numéro de dépôt: **20191833.1**

(22) Date de dépôt: **19.08.2020**

(51) Classification Internationale des Brevets (IPC):
**G06F 15/173** *(2006.01)*  **H04L 45/48** *(2022.01)*
**H04L 45/00** *(2022.01)*  **H04L 45/12** *(2022.01)*

(52) Classification Coopérative des Brevets (CPC):
**G06F 15/173; H04L 45/123; H04L 45/22;
H04L 45/48; H04L 45/54**

(54) **PROCÉDÉ RAPIDE D'ÉTABLISSEMENT DE ROUTES DE COMMUNICATION ENTRE ORDINATEURS D'UN SUPERORDINATEUR**

SCHNELLVERFAHREN ZUM AUFBAU VON KOMMUNIKATIONSWEGEN ZWISCHEN DEN RECHNERN EINES SUPERCOMPUTERS

METHOD FOR ESTABLISHING QUICK COMMUNICATION ROUTES BETWEEN COMPUTERS OF A SUPERCOMPUTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.08.2019 FR 1909364**

(43) Date de publication de la demande:
**24.02.2021 Bulletin 2021/08**

(73) Titulaires:
• **Bull SAS
78340 Les Clayes-sous-Bois (FR)**
• **Commissariat à l'Energie Atomique et aux Energies Alternatives
75015 Paris (FR)**

(72) Inventeurs:
• **GLIKSBERG, John
91680 Bruyères-le-Châtel (FR)**
• **CAPRA, Antoine
91220 Brétigny-sur-Orge (FR)**
• **LOUVET, Alexandre
78120 Rambouillet (FR)**

(74) Mandataire: **Lebkiri, Alexandre
Cabinet Camus Lebkiri
25, Rue de Maubeuge
75009 Paris (FR)**

(56) Documents cités:
**EP-A1- 3 107 253      FR-A1- 3 022 423
US-A1- 2019 260 645**

## Description

### DOMAINE TECHNIQUE DE L'INVENTION

Le domaine technique de l'invention est celui des superordinateurs aussi appelés super calculateurs.
Plus particulièrement le domaine de l'invention est celui des ordinateurs hautes performances aussi appelés ordinateurs, ou calculateurs, HPC.
L'invention a pour objet un procédé rapide d'établissement de routes de communication entre ordinateurs d'un superordinateur.

### ARRIERE-PLAN TECHNOLOGIQUE DE L'INVENTION

Les superordinateurs utilisés pour le calcul haute performance sont composés d'ordinateurs organisés en grappe. Ces grappes sont généralement régulières et, dans la majorité des cas, organisées en arbre de type « fat tree ». Plus généralement l'organisation de ces grappes peut être décrite comme une superposition régulière d'arbres de connexion.
Les ordinateurs sont connectés aux feuilles de cette grappe et communiquent via les branches ou liens (physiquement des câbles connectés à des commutateurs ou switches). Une famille de telles organisations de réseaux (on parle de « topologies ») nous intéresse car elle permet de décrire avec précision une majorité des superordinateurs existants et est très régulière. Il s'agit des Parallel Generalized Fat-Trees (PGFT) qui sont des réseaux organisés par niveaux, par groupes, avec toujours le même nombre de liens respectivement montants et descendants pour tous les commutateurs à chaque niveau. Cette organisation de réseau apporte en plus la garantie qu'il n'existe qu'un seul plus court chemin entre chaque feuille et chaque racine. Cette organisation facilite l'établissement de routes de communication et les garanties en performance et d'absence de boucle de dépendance de communications (« deadlock »). Cette garantie d'absence de deadlock est atteinte si les routes sont toutes « montantes-descendantes », c'est-à-dire, composées d'abord d'une phase de montée puis d'une phase de descente selon l'organisation par étage des PGFT. Pour un réseau PGFT parfait ou dégradé, tous les chemins les plus courts entre chaque paire d'ordinateurs sont montant-descendants.
Pour satisfaire les besoins en performance exprimés par les utilisateurs de superordinateurs, il n'est pas rare qu'un superordinateur contienne au moins une dizaine de milliers de commutateurs. Cela rend les pannes quasiment certaines. En effet même si tous les commutateurs sont fiables et ont une probabilité de panne d'une par an, étant donné le nombre de commutateurs, cela revient à une panne par heure au niveau du superordinateur. S'ajoute également le risque de pannes d'autre éléments des superordinateurs. Ainsi, lorsque la quantité d'équipements est élevée le risque de pannes devient plus courant et il conviendrait d'y être tolérant en y réagissant automatiquement.
Pour les commutateurs cela revient à effectuer une mise à jour des tables de routage suffisamment rapide pour ne pas interrompre les applications en cours. Ici le suffisamment rapide signifie un temps total de réaction aux événements de moins de quinze secondes. Donc en prenant en compte les temps de détection de pannes, les temps d'envoi des tables, les temps écriture des tables de routage et une marge de manoeuvre, un tel temps d'établissement des routes doit être de moins de cinq secondes. En pratique l'intervalle de 15 secondes correspond à une durée accordée par un superviseur à un dispositif pour se signaler, ou encore « donner signe de vie ». Au-delà de ce délai le superviseur considère que de dispositif est perdu. Le superviseur réaffecte donc toutes les tâches du dispositif perdu à d'autres dispositifs.
En sachant que pour des machines de très grande taille, les temps moyens entre des pannes consécutives peuvent descendre à des ordres de grandeur similaires à ceux des temps de réaction maximaux autorisés, il conviendrait de plus que les routes mises à jour soient de qualité similaire à celles qu'on pourrait calculer en s'accordant un temps plus long.
Si ces conditions ne sont pas remplies, alors toute panne sur un commutateur entraine une dégradation des performances du superordinateur.
Dans la pratique aucune des solutions connues ne satisfait à ces exigences. Il existe plusieurs types de procédés d'établissement de routes de communication applicables à de telles machines.
On connait par exemple « Dmodk », décrit en 2010 dans « D-Mod-K Routing Providing Non-Blocking Traffic for Shift Permutations on Real Life Fat Trees » par E. Zahavi. Cependant cette solution fonctionne uniquement si le réseau respecte parfaitement la description PGFT. Ces solutions ne sont donc plus utilisables dès la moindre divergence, c'est-à-dire dès la première panne.
On connaît aussi le document US 2019 260 645 qui décrit un procédé pour établir des routes de communications entre les noeuds d'un supercalculateur. Ledit procédé vise à équilibrer l'utilisation des routes de communication pour éviter leur congestion.
On connait également « Random diff » décrit en 2016 par J.-N. Quintin et P. Vignéras dans « Transitively Deadlock-Free Routing Algorithms ». Cette solution calcule rapidement des changements de routes en réaction à des pannes. Cependant la qualité de routes calculées se dégrade inexorablement, et un rétablissement de matériel précédemment dégradé ne résulte pas nécessairement en un rétablissement des routes calculées précédemment. C'est-à-dire que même en cas de restauration totale du système à son état fonctionnel initial, les routes ne seront plus optimales.
On connait encore des solutions directement applicables à des PGFT dégradés, par exemple « Ftree » (« Optimized InfiniBand fat-tree routing for shift all-to-all communication patterns », 2009, E. Zahavi, G. Johnson, D. Kerbyson et M. Lang) et « UpDn » (« Current OpenSM Routing § UPDN Routing Algorithm », 2007, Intel; Mellanox; Voltaire; HNR Consulting). Cependant ces solutions sont trop lentes pour les tailles de superordinateurs envisagées. De plus la qualité des routes produites se dégrade rapidement en considérant un nombre successif de pannes incrémentales.

Enfin on connaît « SSSP » décrit en 2009 dans « Optimized Routing for Large-Scale InfiniBand Networks » par T. Hoefler, T. Schneider et A. Lumsdaine. Cette solution n'est pas spécifique à une topologie précise. Dans la pratique cette solution est encore plus lente que la précédente. De plus, pour des PGFT parfaits elle produit des routes de qualité inférieures à celles des solutions précédentes. Comme précédemment la qualité des routes produites se dégrade en considérant un nombre successif de pannes incrémentales.

## RESUME DE L'INVENTION

L'invention offre une solution aux problèmes évoqués précédemment, en permettant de recalculer en moins de 5 secondes l'ensemble des routes dans un superordinateur comportant une dizaine de milliers de commutateurs.

L'invention est plus particulièrement optimisée pour les PGFT, mais elle est applicable dans une plus grande classe de grappes d'ordinateurs en forme d'arbre ou de superposition d'arbres, que ces arbres soient dégradés ou non.

Le procédé selon l'invention comporte une étape de découverte, dans laquelle on détermine les chemins les plus courts de tout commutateur à tout ordinateur. Lors de cette étape on estime pour chaque commutateur le nombre de commutateurs à son étage et dans son groupe. Ce nombre estimé est désigné comme le diviseur du commutateur S et noté div(S). Lors de cette étape on numérote de manière contiguë les ordinateurs. Cette numérotation est faîte, de préférence, selon un ordre déterministe topologiquement optimal, par groupes d'ordinateurs de mêmes types ou non.

Le procédé selon l'invention comporte une étape de calcul à appliquer pour tout commutateur vers tous les ordinateurs en tant que destinations une règle arithmétique de sélection de chemin parmi les chemins les plus courts. Ladite règle arithmétique associe à des numéros de destinations consécutifs des ports consécutifs. L'étape de calcul privilégie d'abord des ports vers des commutateurs distincts avant les ports vers des mêmes commutateurs. Cela permet, autant que possible, de regrouper toutes les communications allant vers la même destination.

Le procédé selon l'invention permet aussi, comme sous-produit d'une étape, de produire des routes alternatives.

Un aspect de l'invention concerne un procédé d'établissement de routes de communication entre ordinateurs d'un superordinateur, les ordinateurs étant interconnectés via un réseau d'interconnexion comportant une pluralité de commutateurs, chaque commutateur ayant un identifiant unique, chaque commutateur comportant une pluralité de ports, chaque port ayant un numéro distinct pour le commutateur, caractérisé en ce qu'il comporte les étapes suivantes :

- Association à chaque ordinateur et à chaque commutateur d'un identifiant unique ;
- Association à chaque commutateur d'une table de coûts, cette table comportant une ligne pour chaque commutateur feuille, chaque ligne comportant un coût correspondant au nombre de commutateurs à utiliser pour atteindre le commutateur feuille depuis le commutateur associé à la table de coûts ;
- Association à chaque commutateur d'un diviseur fonction du nombre de commutateurs à son niveau et dans son groupe ;
- Production, pour chaque commutateur de tables associant un groupe de ports du commutateur à un identifiant de commutateur connecté à ces ports, le groupe étant ordonnée par numéro de port, les groupes étant ordonnées par identifiant de commutateur ;
- Association à chaque ordinateur d'un numéro distinct, le numéro d'ordinateur étant lié au commutateur auquel est connecté l'ordinateur, chaque commutateur feuille, et chaque groupe de de commutateurs feuilles, ayant un numéro d'ordinateur minimum et un numéro d'ordinateur maximum, un ordinateur associé à un numéro entre ledit minimum et ledit maximum étant forcément connecté audit commutateur feuille ou au groupe de commutateurs feuille;
- Assignation, pour chaque commutateur feuille et pour chaque ordinateur qui y est connecté d'une route déterministe pour l'ordinateur ;
- Production, pour chaque commutateur non feuille, d'une table de routage selon les étapes suivantes :

  - Production, pour chaque commutateur feuille, d'un ensemble de groupes de ports du commutateur non feuille, les groupes de ports étant ceux dont la table de coût du commutateur associé comporte une ligne correspondant au commutateur feuille dont le coût est strictement inférieur au coût associé au même commutateur feuille dans la table de coût du commutateur non feuille, si l'ensemble n'est pas vide alors pour chaque ordinateur connecté au commutateur feuille :

    - Sélection d'un groupe de ports dans l'ensemble des groupes de ports, le groupe sélectionné ayant l'indice obtenu par :

      - La fonction $\lfloor d/div(s) \rfloor \mod \#c$ ,

avec ⌊ ⌋ la partie entière, d l'identifiant d'ordinateur, div(s) le diviseur associé au commutateur, #c le nombre de groupes dans l'ensemble;

- Sélection d'un port dans le groupe de ports sélectionné, le port sélectionné étant obtenu par :

- La fonction $\left\lfloor \frac{d}{div(s)*\#c} \right\rfloor mod\ \#g$, avec #g le nombre de ports dans le groupe sélectionné ;

- Création d'une route déterministe du commutateur non feuille vers l'ordinateur empruntant le port sélectionné ;

- Ecriture des routes déterministes dans les commutateurs.

Outre les caractéristiques qui viennent d'être évoquées dans le paragraphe précédent, le procédé selon un aspect de l'invention peut présenter une ou plusieurs caractéristiques complémentaires parmi les suivantes, considérées individuellement ou selon toutes les combinaisons techniquement possibles :

- Le réseau d'interconnexion est organisé en arbre élargi ;
- L'arbre élargi est élagué avec des liens redondants ;
- L'association des tables coût se fait par la mise en oeuvre d'une propagation de coût en montée puis en descente ;
- On produit au moins une route alternative d'un commutateur vers un ordinateur en utilisant un port de l'ensemble de groupes de ports pour cet ordinateur et pour ce commutateur ;

L'invention et ses différentes applications seront mieux comprises à la lecture de la description qui suit et à l'examen des figures qui l'accompagnent.

**BREVE DESCRIPTION DES FIGURES**

Les figures sont présentées à titre indicatif et nullement limitatif de l'invention.

- La figure 1 montre une représentation schématique des moyens permettant la mise en oeuvre du procédé selon l'invention.
- La figure 2 montre une illustration d'un fragment d'un réseau d'interconnexion pour la mise en oeuvre du procédé selon l'invention.
- La figure 3 montre des étapes du procédé selon l'invention.

**DESCRIPTION DETAILLEE**

Les figures sont présentées à titre indicatif et nullement limitatif de l'invention.

Sauf précision contraire, un même élément apparaissant sur des figures différentes présente une référence unique.

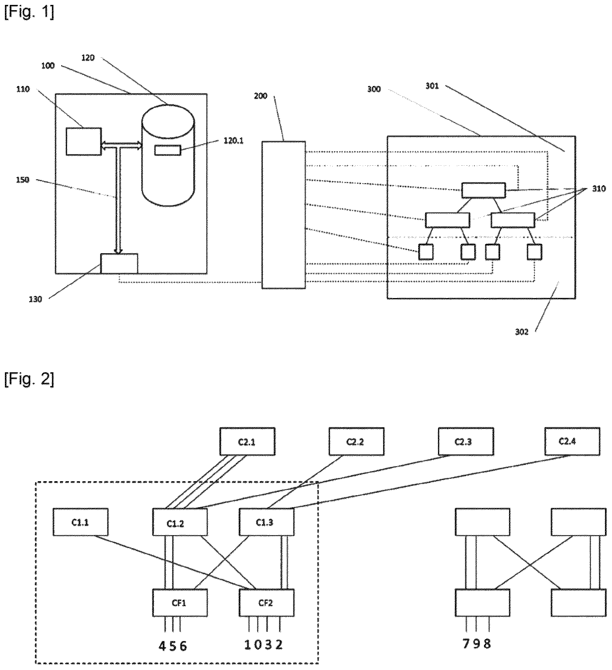

[Fig 1] montre :

- Un dispositif 100 de traitements ;
- Un réseau 200 de gestion ;
- Un réseau 300 de calcul.

Le dispositif 100 de traitements, le réseau 200 de gestion et le réseau 300 de calcul sont des parties d'un superordinateur.

La figure 1 montre que le dispositif 100 de traitement comporte :

- Un microprocesseur 110 ;
- Des moyens 120 de stockage ;
- Une interface 130 de communications.

La figure 1 montre que le microprocesseur du dispositif de traitement, les moyens de stockage du dispositif de traitement et l'interface de communication du dispositif de traitement sont interconnectés par un bus 150.

Dans ce document lorsqu'une étape est mise en oeuvre par un dispositif, cela signifie qu'un microprocesseur dudit dispositif exécute une séquence d'instructions correspondant à cette action. Cette séquence d'instruction est enregistrée sur des moyens de stockage dudit dispositif. Lorsque ledit dispositif émet ou reçoit des messages, ceux-ci sont reçus ou émis par une interface de communication dudit dispositif.

Le dispositif 100 de traitement est assimilable à un ordinateur physique ou virtuel.

Les moyens de stockages sont, par exemple, une unité logique de stockage. C'est-à-dire qu'ils sont assimilables à un disque du point de vue de l'utilisateur du dispositif de traitement. Physiquement ils peuvent être tout ce qu'un système d'exploitation, avec les pilotes adéquats, est capable de présenter comme un disque. Cela va du simple disque dur local, au disque distant. Il peut s'agir, physique de tout ou partie d'une grappe de disques. Par distant on entend atteignable par un réseau de télécommunication.

Le figure 1 montre que les moyens des stockages du dispositif 100 de traitement comporte plusieurs zones dont une zone 120.1 qui comporte des codes instructions pour la mise en oeuvre du procédé selon l'invention.

La figure 1 montre que le dispositif 100 de traitement est connecté au réseau 200 de gestion par l'intermédiaire de son interface de communication. Un tel réseau de gestion est, en général, un réseau de type Ethernet avec un débit de l'ordre du Gb/s. Le cas décrit est celui d'un superordinateur géré hors bande. Dans la pratique on trouve tout aussi souvent des réseaux de gestion matérialisé en Infiniband ou autre. Dans la pratique on trouve également des superordinateurs gérés en bande. Dans ce dernier cas, réseau de gestion et réseau de calcul sont les mêmes.

La figure 1 montre que le réseau 300 de calcul, assimilable à un superordinateur, comporte :

- Un réseau 301 d'interconnexion, et
- Une pluralité 302 d'ordinateurs, aussi appelés lames de calcul.

Le réseau d'interconnexion comporte une pluralité 310 de commutateurs organisés selon une configuration prédéterminée. Une telle organisation est, par exemple, un arbre élargi. Un arbre élargi est aussi appelé un « fat tree ». Une telle organisation est aussi un arbre élargi élagué avec des liens redondants. Cette famille d'organisation est également connue sous le nom de PGFT.

Dans un arbre un lien est redondant s'il existe plusieurs liens entre deux mêmes commutateurs.

La figure 1 montre que les commutateurs sont connectés entre eux et à la pluralité d'ordinateurs via le réseau d'interconnexion. La figure 1 montre également que les commutateurs du réseau d'interconnexion et les ordinateurs de la pluralité d'ordinateur sont également connecté au réseau de gestion. Le réseau d'interconnexion est en général un réseau à très haut débit, c'est-à-dire des réseaux dont le débit est supérieur ou égal à 40Gb/s. Les liens entre la pluralité d'ordinateurs de calcul et les commutateurs feuille sont de même nature que les liens entre les commutateurs du réseau d'interconnexion.

Parmi les commutateurs on distingue les commutateurs dits feuilles qui sont les commutateurs auxquels sont connectés les ordinateurs. Dans ce document on dira que les ordinateurs sont les descendants immédiats des commutateurs feuilles. La descendance est immédiate car il n'y a pas de commutateur intermédiaire entre le commutateur feuille et l'ordinateur.

Dans un mode de réalisation le procédé selon l'invention est mis en oeuvre par le dispositif 100 de traitement qui fait partie de moyens de supervision du superordinateur. Le dispositif 100 de traitement lit et/ou écrit les états et les configurations des commutateurs du réseau d'interconnexion via le réseau de gestion.

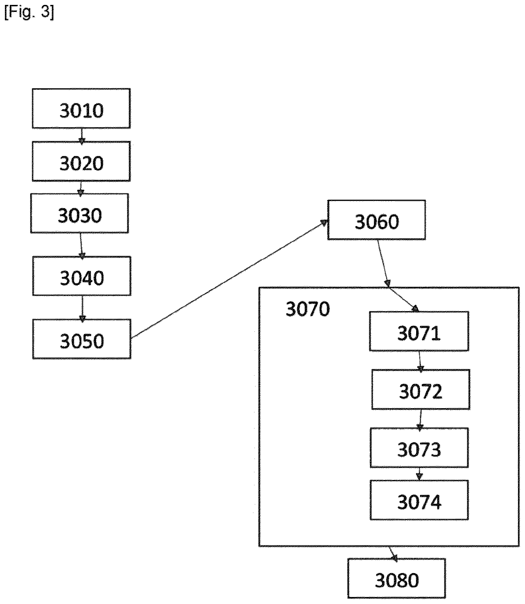

La [Fig 3] montre une étape 3010 d'association à chaque commutateur du réseau d'interconnexion et à chaque ordinateur de la pluralité d'ordinateur d'un identifiant unique. Il existe plusieurs méthodes pour cela. Il s'agit en fait d'établir une carte de la topologie du réseau, ladite carte étant utilisée pour les étapes suivantes. On obtient également l'étage d'appartenance des commutateurs. Les commutateurs feuille sont à l'étage le plus faible. A chaque fois que l'on s'éloigne d'un commutateur feuille on gagne un étage. Autrement dit, l'étage d'un commutateur est le nombre de commutateurs qu'il faut utiliser pour atteindre le commutateur feuille le plus proche. On pourra ainsi associer les résultats à un identifiant unique et écrire les configurations calculées sur les dispositifs correspondants.

On passe à une étape 3020 d'association à chaque commutateur d'une table de coûts. Une telle table comporte autant de lignes qu'il y a de commutateur feuille dans le réseau d'interconnexion. Chaque ligne comporte alors un identifiant de commutateur feuille associé à une coût. Un coût est une valeur numérique. Cette valeur représente un nombre de commutateurs à utiliser pour atteindre le commutateur feuille depuis le commutateur pour lequel on calcule la table de coût. On peut réaliser ce calcul par propagation par étage en montée descente. Une telle montée descente se fait comme suit :

- On initialise à $+\infty$ les coûts des tous les commutateurs vers tous les commutateurs feuilles ;
- On initialise à 0 les coûts de chaque commutateur feuilles vers lui-même ;
- On procède à une série de propagations de tous les coûts dans un étage vers le suivant, d'abord en montée, puis en descente. Cela signifie que l'on commence et termine par les commutateurs feuilles.
- A chaque étape on propage le coût + 1 de chaque commutateur vers tous ceux de l'étage suivant auquel celui-ci est connecté ;
- On effectue la propagation uniquement si la valeur que l'on s'apprête à remplacer est strictement supérieure à celle que l'on veut propager.

Le fait de commencer par une montée signifie que l'on commence par traiter les commutateurs feuilles.

Avec un réseau d'interconnexion dans un état utilisable, cette étape 3020 permet d'associer à chaque commutateur feuille, un coût fini vers tous les autres commutateurs feuilles. Si tel n'est pas le cas, alors cela signifie que le réseau d'interconnexion n'est pas utilisable et l'on peut interrompre le calcul des routes. Il faut soit une intervention autre, par exemple humaine, pour retourner le réseau d'interconnexion dans un état utilisable, soit basculer vers une autre méthode appropriée pour le réseau d'interconnexion considéré.

La description de cette étape correspond à un mode de réalisation pour déterminer les plus courts chemins de tout commutateur vers toutes les feuilles dans un PGFT. Il existe d'autres méthodes qui permettent d'arriver au même résultat, par exemple en mettant en oeuvre l'algorithme de Dijkstra.

La figure 3 montre une étape 3030 d'association à chaque commutateur d'un diviseur. Cette association est réalisé par la mise en oeuvre des étapes suivantes :

- On initialise à 1 les diviseurs de tous les commutateurs ;
- On propage en montée les valeurs des diviseurs vers les étages supérieurs, à chaque étape on traite un niveau, à chaque étape on effectue :

- On propage le diviseur d'un commutateur s multiplié par le nombre de commutateurs au-dessus du commutateur s, cette propagation se faisant vers les commutateurs immédiatement au-dessus du commutateur s ;
- On effectue la propagation c'est-à-dire la modification du diviseur uniquement si la valeur que l'on s'apprête à remplacer est inférieure à celle que l'on veut propager.

[Fig 2] illustre la mise en oeuvre de l'étape 3030 d'association d'un diviseur. La figure 2 montre :

- Un premier commutateur CF1 feuille connecté :

  - Via 2 liens à un commutateur C1.2 ;
  - Via 1 lien à une commutateur C1.3 ;

- Un deuxième commutateur CF2 feuille connecté :

  - Via 1 lien à un commutateur C1.1 ;
  - Via 1 lien au commutateur C1.2 ;
  - Via 2 liens au commutateur C1.3 ;

- Que le commutateur C1.2 est connecté :

  - Via 3 liens à un commutateur C2.1 ;
  - Via un lien à un commutateur C2.3 ;

- Que le commutateur C1.3 est connecté :

  - Via 1 lien à un commutateur C2.2 ;
  - Via 1 lien à un commutateur C2.4.

A la première étape de l'étape d'association de diviseur on affecte à chaque commutateur un diviseur div(commutateur) = 1.

A la deuxième étape de l'étape d'association on propage les diviseurs des commutateurs feuille vers le haut. Pour le commutateur CF1 qui a 2 commutateurs au-dessus de lui, le commutateur C1.2 et le commutateur C1.3. On propage donc la valeur 2 * 1 comme diviseur du commutateur C1.2 et du commutateur C1.3. Pour le commutateur CF2 qui a trois commutateurs au-dessus de lui on propage la valeur 3 * 1 vers ces commutateurs. Comme 3 est supérieur à 2 alors ces trois commutateurs se voit associé un diviseur qui a une valeur de 3.

Une fois tous les commutateurs d'un étage traités on passe aux commutateurs de l'étage suivant. Par exemple, pour le commutateur C1.2 qui a 2 commutateurs au-dessus de lui on propage la valeur 2 * 3 c'est-à-dire 6 vers les commutateurs au-dessus de lui.

Le diviseur associé à un commutateur est donc fonction de la connectivité du commutateur qui est, dans ce cas, les commutateurs auquel est directement connecté ledit commutateur.

Cette association de diviseurs peut être faîte en même temps de l'association des tables de coûts. Dans une autre variante ce diviseur peut être calculé au moment de la sélection d'un chemin, plutôt que dans une phase préliminaire. Enfin ce diviseur peut être défini, dans une variante, comme une médiane des produits des nombres de liens montants pour toutes les descentes ou alors avec une détermination de groupes de commutateurs. La définition d'un groupe de commutateur étant, par exemple, que le partage d'au moins un noeud atteignable en descente par deux commutateur implique l'appartenance de ces deux commutateurs au même groupe.

Dans une étape 3040 de production de groupes de ports, un groupe de ports étant, pour un commutateur donné, une liste de ports, chacun des ports de la liste étant connecté à un même commutateur. Si un commutateur donné est immédiatement raccordé à N autres commutateurs, alors on produira pour lui N groupes de ports. Une fois produits ces groupes de ports sont ordonnés par identifiant de commutateur. Les ports à l'intérieur des groupes de ports sont ordonnés par numéro de port.

Dans une étape 3050 de numérotation des ordinateurs on associe à chaque ordinateur un numéro distinct. Dans une variante préféré ce numéro est lié au commutateur auquel est connecté cet ordinateur. Dans une variante préférée on associe aux ordinateurs des nombres naturels contigus tel que des ordinateurs proches ont des identifiants proches. Ici on considère une proximité topologique.

Pour obtenir ces résultats, on parcourt les feuilles, sans repasser deux fois par la même, en privilégiant d'abord les feuilles à plus bas coût et ensuite dans l'ordre des identifiants uniques. Pour chaque feuille parcourue on assigne à chaque ordinateur qui y est connecté le dernier identifiant assigné + 1, dans l'ordre des numéros de ports.

La figure 3 montre une étape 3060 d'assignation, pour chaque commutateur feuille, d'une route déterministe pour chaque ordinateur connecté au commutateur feuille. Ce sont les premières entrées des routes à produire. C'est-à-dire ce sont les premières entrées des tables de routages des commutateurs feuilles. Autrement dit, pour chaque commutateur feuille, pour chaque ordinateur qui y est connecté, on assigne la route déterministe correspondante.

La figure 3 montre une étape 3070 de production, pour chaque commutateur non feuille, d'une table de routage. Pour chaque commutateur non feuille les étapes suivantes sont répétées.

La figure 3 montre une étape 3071 de production d'un ensemble de groupes de ports du commutateur non feuille, les groupes de ports étant ceux dont la table de coût du commutateur associé comporte une ligne correspondant au commutateur feuille dont le coût est strictement inférieur au coût associé au même commutateur feuille dans la table de coût du commutateur non feuille. En d'autres termes si on traite le commutateur non feuille S, pour chaque commutateur feuille F, on construit l'ensemble C des groupes de ports du commutateur S tels que le coût de leur commutateur distant vers F est strictement inférieur à celui de S vers F. Si l'ensemble obtenu n'est pas vide alors pour chaque ordinateur connecté au commutateur feuille on effectue la séquence d'opérations suivante :

- Sélection 3072 d'un groupe de ports dans l'ensemble des groupes de ports précédemment produit, le groupe de ports sélectionné ayant l'indice valant $\lfloor d/div(s) \rfloor \bmod \#c$. Dans cette formule on a :

  - $\lfloor \rfloor$ la partie entière,
  - d l'identifiant d'ordinateur,
  - div(s) le diviseur associé au commutateur,
  - #c le nombre de groupes dans l'ensemble.

- Sélection 3073 d'un port dans le groupe de ports précédemment sélectionné, le port sélectionné ayant l'indice valant $\left\lfloor \dfrac{d}{div(s) * \#c} \right\rfloor \bmod \#g$. Dans cette formule on a :

  - #g le nombre de ports dans le groupe sélectionné.

- Création 3074 d'une route déterministe pour l'ordinateur empruntant le port précédemment sélectionné.

Enfin une fois tous les commutateurs traités, on passe à une étape 3080 d'écriture des routes déterministes produites dans les commutateurs.

Les routes produites par le procédé selon l'invention, dans un PGFT dégradé ou non, est correct en ce sens que toutes les routes déterministes et alternatives mènent à leur destination sans boucle et sans blocage.

Les routes produites par le procédé selon l'invention sont minimales, c'est-à-dire que seuls des plus courts chemins peuvent être empruntés. Cela est vrai que le réseau soit dégradé ou non.

Les routes produites par le procédé selon l'invention sont prédictibles et reproductibles : chaque étape est déterministe, même en opérant en parallèle ce qui peut l'être.

Les routes calculées par le procédé selon l'invention sont bien réparties. C'est à dire, dans un PGFT parfait, en utilisant les règles arithmétiques décrites, ce routage est équivalent à « Dmodk » et bénéficie donc des mêmes garanties. En dégradant un PGFT, les données précalculées sont peu affectées, par exemple un commutateur ne voit son diviseur potentiellement affecté que par des dégradations exhaustives d'équipements en dessous de lui-même. La répartition arithmétique du routage choisie parmi les chemins effectivement plus courts reste cohérente sous dégradations, même si elle ne garantit plus nécessairement que toutes les routes vers une même destination sont regroupées.

En mesurant la qualité du routage avec des estimations statiques de risque de congestion pour plusieurs classes de schémas de communication (et en les comparant aux facteurs théoriques de congestion calculés à partir du nombre de liens par niveau, ainsi qu'aux techniques existantes décrites dans le préambule lorsque c'est applicable), on observe que celles-ci sont :

- Optimales pour des PGFT pas ou peu dégradés,
- Meilleures que les alternatives pour des quantités de dégradations allant jusqu'à des échelles bien plus grandes que celles observées en pratique.

Avec l'invention il devient donc possible de mettre à jour toutes les routes d'un superordinateur qui subit des pannes, cette mise à jour étant suffisamment rapide pour ne pas interrompre les applications en cours : le procédé de détermination des routes est fortement parallélisable une fois que le pré-calcul est réalisé. Chaque étape du pré-calcul est elle-même au moins partiellement parallélisable. Ceci est possible sans perdre les propriétés de qualité de routage en grande partie grâce à la nature arithmétique du procédé.

Avec l'invention, si on veut produire des tables de routage alternatives pour du routage adaptatif vers au moins un ordinateur, on assigne alors les ports des ensembles de groupes de ports aux routes alternatives de commutateur S vers le au moins un ordinateur. On peut le faire pour chaque ordinateur.

## Revendications

1. Procédé d'établissement de routes de communication entre ordinateurs d'un superordinateur, les ordinateurs étant interconnectés via un réseau d'interconnexion comportant une pluralité de commutateurs, chaque commutateur ayant un identifiant unique, chaque commutateur comportant une pluralité de ports, chaque port ayant un numéro distinct pour le commutateur, **caractérisé en ce qu'**il comporte les étapes suivantes :

   - Association (3010) à chaque ordinateur et à chaque commutateur d'un identifiant unique ;
   - Association (3020) à chaque commutateur d'une table de coûts cette table comportant une ligne pour chaque commutateur feuille, chaque ligne comportant un coût correspondant au nombre de commutateurs à utiliser pour atteindre le commutateur feuille depuis le commutateur associé à la table de coûts ;
   - Association (3030) à chaque commutateur d'un diviseur fonction de sa connectivité;

- Production (3040), pour chaque commutateur de tables associant un groupe de ports du commutateur à un identifiant de commutateur connecté à ces ports, le groupe étant ordonné par numéro de port, les groupes étant ordonnés par identifiant de commutateur ;
- Association (3050) à chaque ordinateur d'un numéro distinct, le numéro d'ordinateur étant lié au commutateur auquel est connecté l'ordinateur, chaque commutateur feuille, et chaque groupe de de commutateurs feuilles, ayant un numéro d'ordinateur minimum et un numéro d'ordinateur maximum, un ordinateur associé à un numéro entre ledit minimum et ledit maximum étant forcément connecté audit commutateur feuille ou au groupe de commutateurs feuille;
- Assignation (3060), pour chaque commutateur feuille et pour chaque ordinateur qui y est connecté d'une route déterministe pour l'ordinateur ;
- Production (3070), pour chaque commutateur non feuille, d'une table de routage selon les étapes suivantes :

   o Production (3071), pour chaque commutateur feuille, d'un ensemble de groupes de ports du commutateur non feuille, les groupes de ports étant ceux dont la table de coût du commutateur associé comporte une ligne correspondant au commutateur feuille dont le coût est strictement inférieur au coût associé au même commutateur feuille dans la table de coût du commutateur non feuille, si l'ensemble n'est pas vide alors pour chaque ordinateur connecté au commutateur feuille :

      1. Sélection (3072) d'un groupe de ports dans l'ensemble des groupes de ports, le groupe sélectionné ayant l'indice obtenu par :

        a. La fonction $\lfloor d/div(s) \rfloor \bmod \#c$, avec $\lfloor \rfloor$ la partie entière, d l'identifiant d'ordinateur, div(s) le diviseur associé au commutateur, #c le nombre de groupes dans l'ensemble.

      2. Sélection (3073) d'un port dans le groupe de ports sélectionné, le port sélectionné étant obtenu par :

        a. La fonction $\left\lfloor \dfrac{d}{div(s) * \#c} \right\rfloor \bmod \#g$, avec #g le nombre de ports dans le groupe sélectionné ;

      3. Création (3074) d'une route déterministe du commutateur non feuille vers l'ordinateur empruntant le port sélectionné.

- Ecriture (3080) des routes déterministes dans les commutateurs.

**2.** Procédé d'établissement de routes de communication selon la revendication 1, **caractérisé en ce que** le réseau d'interconnexion est organisé en arbre élargi.

**3.** Procédé d'établissement de routes de communication selon la revendication 2, **caractérisé en ce que** l'arbre élargi est élagué avec des liens redondants.

**4.** Procédé d'établissement de routes de communication selon l'une des revendications précédentes, **caractérisé en ce que** l'association des tables coût se fait par la mise en oeuvre d'une propagation de coût en montée puis en descente.

**5.** Procédé d'établissement de routes de communication selon l'une des revendications précédentes **caractérisé en ce qu'**on produit au moins une route alternative d'un commutateur vers un ordinateur en utilisant un port de l'ensemble de groupes de ports pour cet ordinateur et pour ce commutateur.

**Patentansprüche**

**1.** Verfahren zum Einrichten von Kommunikationsrouten zwischen Computern eines Supercomputers, wobei die Computer über ein Verbindungsnetzwerk miteinander verbunden sind, das eine Vielzahl von Schaltern umfasst, wobei jeder Schalter eine eindeutige Kennung aufweist, jeder Schalter eine Vielzahl von Ports umfasst und jeder Port eine individuelle Nummer für den Schalter aufweist, **dadurch gekennzeichnet, dass** es die folgenden Schritte umfasst:

   - Zuordnen (3010) zu jedem Computer und zu jedem Schalter einer eindeutigen Kennung;
   - Zuordnen (3020) zu jedem Schalter einer Kostentabelle, wobei diese Tabelle eine Zeile für jeden Leaf-Switch umfasst, wobei jede Zeile einen Kostenwert umfasst, der der Anzahl von zu verwendenden Schaltern zum Erreichen des Leaf-Switch von dem Schalter aus entspricht, der der Kostentabelle zugeordnet ist;
   - Zuordnen (3030) zu jedem Schalter eines Teilers in Abhängigkeit von seiner Konnektivität;

- Erstellen (3040), für jeden Schalter, von Tabellen, die eine Gruppe von Ports des Schalters einer Schalterkennung zuordnen, die mit diesen Ports verbunden ist, wobei die Gruppe nach Portnummer geordnet ist, wobei die Gruppen nach Schalterkennung geordnet sind;

- Zuordnen (3050) zu jedem Computer einer individuellen Nummer, wobei die Computernummer mit dem Schalter verknüpft ist, mit dem der Computer verbunden ist, wobei jeder Leaf-Switch und jede Gruppe von Leaf-Switches eine minimale Computernummer und eine maximale Computernummer aufweist, wobei ein Computer, der einer Nummer zwischen dem Minimum und dem Maximum zugeordnet ist, zwangsläufig mit dem Leaf-Switch oder mit der Gruppe von Leaf-Switches verbunden ist;

- Zuweisen (3060), für jeden Leaf-Switch und für jeden Computer, der damit verbunden ist, einer deterministischen Route für den Computer;

- Erstellen (3070), für jeden Nicht-Leaf-Switch, einer Routing-Tabelle gemäß den folgenden Schritten:

    o Erstellen (3071), für jeden Leaf-Switch, eines Satzes von Portgruppen des Nicht-Leaf-Switches, wobei die Portgruppen diejenigen sind, deren Kostentabelle des zugeordneten Schalters eine Zeile umfasst, die dem Leaf-Switch entspricht, dessen Kostenwert strikt geringer als der Kostenwert ist, der demselben Leaf-Switch in der Kostentabelle des Nicht-Leaf-Switches zugeordnet ist, falls der Satz nicht leer ist, dann für jeden Computer, der mit dem Leaf-Switch verbunden ist:

        1. Auswählen (3072) einer Portgruppe aus dem Satz von Portgruppen, wobei die ausgewählte Gruppe den Index aufweist, der erhalten wird durch:

        a. die Funktion

$$\lfloor d/div(s) \rfloor \bmod \#c$$

, wobei $\lfloor \ \rfloor$ der ganzzahlige Teil, $d$ die Computerkennung, $div(s)$ der Teiler, der dem Schalter zugeordnet ist, $\#c$ die Anzahl von Gruppen in dem Satz darstellt.

        2. Auswählen (3073) eines Ports in der ausgewählten Portgruppe, wobei der ausgewählte Port erhalten wird durch:

        a. die Funktion

$$\left\lfloor \frac{d}{div(s) * \#c} \right\rfloor \bmod \#g$$

, wobei $\#g$ die Anzahl von Ports in der ausgewählten Gruppe ist;

        3. Schaffen (3074) einer deterministischen Route von dem Nicht-Leaf-Switch zu dem Computer hin, wobei der ausgewählte Port benutzt wird.

    - Schreiben (3080) der deterministischen Routen in die Schalter.

**2.** Verfahren zum Einrichten von Kommunikationsrouten nach Anspruch 1, **dadurch gekennzeichnet, dass** das Verbindungsnetzwerk als Fat Tree organisiert ist.

**3.** Verfahren zum Einrichten von Kommunikationsrouten nach Anspruch 2, **dadurch gekennzeichnet, dass** der Fat Tree mit redundanten Verknüpfungen gelichtet wird.

**4.** Verfahren zum Einrichten von Kommunikationsrouten nach einem der vorstehenden Ansprüche, **dadurch gekennzeichnet, dass** das Zuordnen der Kostentabellen durch das Implementieren einer Kostenpropagierung aufwärts, dann abwärts erfolgt.

**5.** Verfahren zum Einrichten von Kommunikationsrouten nach einem der vorstehenden Ansprüche, **dadurch gekennzeichnet, dass** mindestens eine alternative Route eines Schalters zu einem Computer hin unter Verwendung eines Ports des Satzes von Portgruppen für diesen Computer und für diesen Schalter erstellt wird.

**Claims**

**1.** Method for establishing communication routes between computers of a supercomputer, the computers being interconnected via an interconnection network comprising a plurality of switches, each switch having a unique identifier, each switch comprising a plurality of ports, each port having a distinct number for the switch, **characterized in that** it comprises the following steps:

    - Associating (3010) each computer and each switch with a unique identifier;
    - Associating (3020) each switch with a cost table, this table comprising a row for each leaf switch, each row comprising a cost corresponding to the number of switches to be used to reach the leaf switch from the switch associated with the cost table;

- Associating (3030) each switch with a divisor as a function of its connectivity;
- Producing (3040), for each switch, tables associating a group of ports of the switch with a switch identifier connected to these ports, the group being ordered by port number, the groups being ordered by switch identifier;
- Associating (3050) each computer with a distinct number, the computer number being linked to the switch to which the computer is connected, each leaf switch, and each group of leaf switches, having a minimum computer number and a maximum computer number, a computer associated with a number between said minimum and said maximum being necessarily connected to said leaf switch or to the group of leaf switches;
- Assigning (3060), for each leaf switch and for each computer connected to it, a deterministic route for the computer;
- Producing (3070), for each non-leaf switch, a routing table according to the following steps:

      ◦ Producing (3071), for each leaf switch, a set of port groups of the non-leaf switch, the port groups being those of which the cost table of the associated switch comprises a row corresponding to the leaf switch of which the cost is strictly lower than the cost associated with the same leaf switch in the cost table of the non-leaf switch, and if the set is not empty then for each computer connected to the leaf switch:

           1. Selecting (3072) a port group from the set of port groups, the selected group having the index obtained by:

               a. The function

$$\lfloor d/div(s)\rfloor \bmod \#c$$

, where $\lfloor \ \rfloor$ is the integer part, d is the computer identifier, div(s) is the divisor associated with the switch, #c is the number of groups in the set.

           2. Selecting (3073) a port in the selected port group, the selected port being obtained by:

               a. The function

$$\lfloor d/(div(s)*\#c)\rfloor \bmod \#g$$

, where #g is the number of ports in the selected group;

3. Creating (3074) a deterministic route from the non-leaf switch to the computer using the selected port.

      - Writing (3080) the deterministic routes into the switches.

2. Method for establishing communication routes according to claim 1, **characterized in that** the interconnection network is organized as a fat tree.

3. Method for establishing communication routes according to claim 2, **characterized in that** the fat tree is pruned with redundant links.

4. Method for establishing communication routes according to one of the preceding claims, **characterized in that** the association of the cost tables is carried out by implementing a cost propagation in ascending and then descending order.

5. Method for establishing communication routes according to one of the preceding claims, **characterized in that** at least one alternative route from a switch to a computer is generated using a port from the set of port groups for this computer and for this switch.

[Fig. 1]

[Fig. 2]

[Fig. 3]

```
┌──────────┐
│   3010   │
└──────────┘
      │
      ▼
┌──────────┐
│   3020   │
└──────────┘
      │
      ▼
┌──────────┐
│   3030   │
└──────────┘
      │
      ▼
┌──────────┐
│   3040   │
└──────────┘
      │
      ▼
┌──────────┐
│   3050   │
└──────────┘
```

```
                    ┌──────────┐
                    │   3060   │
                    └──────────┘
                          │
                          ▼
┌──────────────────────────────────────┐
│  3070                                  │
│               ┌──────────┐             │
│               │   3071   │             │
│               └──────────┘             │
│                     │                  │
│                     ▼                  │
│               ┌──────────┐             │
│               │   3072   │             │
│               └──────────┘             │
│                     │                  │
│                     ▼                  │
│               ┌──────────┐             │
│               │   3073   │             │
│               └──────────┘             │
│                     │                  │
│                     ▼                  │
│               ┌──────────┐             │
│               │   3074   │             │
│               └──────────┘             │
└──────────────────────────────────────┘
                     │
                     ▼
               ┌──────────┐
               │   3080   │
               └──────────┘
```

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2019260645 A

**Littérature non-brevet citée dans la description**

- **E. ZAHAVI.** *D-Mod-K Routing Providing Non-Blocking Traffic for Shift Permutations on Real Life Fat Trees,* 2010
- **J.-N. QUINTIN ; P. VIGNÉRAS.** *Transitively Deadlock-Free Routing Algorithms,* 2016
- **E. ZAHAVI ; G. JOHNSON ; D. KERBYSON ; M. LANG.** *Optimized InfiniBand fat-tree routing for shift all-to-all communication patterns,* 2009
- **INTEL ; MELLANOX ; VOLTAIRE ; HNR CONSULTING.** *Current OpenSM Routing § UPDN Routing Algorithm,* 2007
- **T. HOEFLER ; T. SCHNEIDER ; A. LUMSDAINE.** *Optimized Routing for Large-Scale InfiniBand Networks,* 2009